(19) Europäisches Patentamt
European Patent Office
Office européen des brevets

(11) **EP 2 034 622 A1**

(12) **EUROPEAN PATENT APPLICATION**

(43) Date of publication:
**11.03.2009 Bulletin 2009/11**

(51) Int Cl.:
*H04B 3/32* (2006.01)     *H04B 3/46* (2006.01)
*H04M 11/06* (2006.01)     *H04L 27/26* (2006.01)

(21) Application number: **07291084.7**

(22) Date of filing: **10.09.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Alcatel Lucent**
**75008 Paris (FR)**

(72) Inventors:
• **Guenach, Mamoun**
  **1830 Machelen (BE)**

• **Van Bruyssel, Danny**
  **9140 Temse (BE)**
• **Ysebaert, Geert**
  **3020 Winksele (BE)**
• **Maes, Jochen**
  **2431 Veerle (BE)**
• **Peeters, Michael**
  **1742 Ternat (BE)**

(74) Representative: **Plas, Axel Ivo Michel et al**
**BiiP cvba**
**Culliganlaan 1B**
**1831 Diegem (Brussels) (BE)**

(54) **A device and associated method for measuring crosstalk**

(57)    The present invention relates to a crosstalk estimation device for estimating crosstalk between disturber communication lines and victim communication lines. The crosstalk estimation device is able to change the power spectral density PSD on the victim communication lines and/or the disturber communication lines. The crosstalk estimation device further receives measured changes in operational parameters on the victim communication lines and/or disturber communication lines in order to estimate the crosstalk induced in the victim communication lines and/or disturber communication lines.

Fig. 2

## Description

## Field of the Invention

The present invention generally relates to crosstalk measurement and more in particular to crosstalk measurement between multiple communication lines.

## Background of the Invention

Transmission of data at high speeds, for instance in Asymmetric Digital Subscriber Line (ADSL) or Very high-speed Digital Subscriber Line (VDSL) network, commonly referred to as xDSL networks is subject to noise injected by external sources. One particular problem is the influence of crosstalk between various subscriber lines within close vicinity. Crosstalk is the effect whereby a first subscriber line induces signals on a second, different subscriber line, which act as noise on that second subscriber line. Such effects are especially noticed when multiple subscriber lines form part of the same cable or cable binder or when they are terminated close to each other, for instance in a Digital Subscriber Line Access Multiplexer (DSLAM) where multiple subscriber lines are terminated on the same board.

Noise effects can be dealt with in various ways, for instance the use of error correction codes can reduce the effects of noise. Such error correction codes, for instance Reed-Solomon, consist of additional bits, which are added to the transmitted user data and which can be used by a receiver to detect and eventually correct corrupted data. Generally error codes can only recover a limited number of errors in data but are able to detect more errors. In such case, the receiver may rely on other mechanisms to obtain corrected data, for instance retransmission. Retransmission can be implemented explicitly, whereby a receiver asks the transmitter to resend a piece of data, or implicitly whereby the transmitter waits for a confirmation of the receipt of the correct data and if no confirmation is received, the transmitter will automatically retransmit the data. However error correction codes and retransmission occupy additional bandwidth, hence reducing the bandwidth available for user data transmission. As such, these error codes reduce the effective speed of high bandwidth connections such as xDSL links. This could be acceptable to cope with impulse noise errors but may become a problem for long term noise effects such as upcoming subscriber lines which may take some time to initialize and establish a connection, and which may permanently induce crosstalk once they are active.

The above described solutions for crosstalk are all designed to recover from errors resulting from crosstalk. Each of those solutions has an impact on the transmitted data and/or data rate and only influences a single communication line, which means that each line should support one for more correction systems. However, if crosstalk can be avoided or reduced significantly, the need for error correction solutions decreases and thus overall performance can increase. A crosstalk reduction system can influence all the communication lines terminated at a central node such as a Digital Subscriber Line Access Multiplexer (DSLAM) or a termination board. Thus, crosstalk reduction or avoidance systems can influence a larger number of communication lines than the above describer error correction systems.

A specific example of solutions for avoiding or reducing crosstalk is based on the estimated crosstalk between communication lines. Such estimations can then be used to configure compensation mechanisms which reduce the effects of crosstalk between multiple communication lines. Crosstalk compensation mechanisms include vectoring, jointly optimizing transmit spectra, artificial and virtual noise spectra and other settings. An example of a crosstalk compensation system and estimation is explained in European Patent Application EP 04 292 070 titled "Crosstalk manager for access network nodes". In this patent application, crosstalk between subscriber lines is estimated based on quantitative information which is automatically gathered. This automatic gathering of information is based on monitoring changes in the condition of the communication lines such as on/off status, line state transitions or changes in noise margin. This solution is able to identify strong crosstalkers which can be useful to optimize communication lines accordingly. However, this solution is not able to determine or estimate crosstalk from weaker crosstalkers. The strong crosstalkers have much more influence on victim lines than weak crosstalkers and as such the effect of the weak crosstalkers is hard to measure in this solution.

Other methods of estimating crosstalk are based on changing the current standards. Some examples of such proposed standard specification changes can be found in a contribution from Conexant Systems Inc. and ASSIA Inc. titled "G.vdsl: Proposed Requirement on Back Channel for Estimating MIMO Channel in VDSL2", various proposals by Actelis Networks such as those titled "Channel Estimation by Abuse of Receivers", "G.vdsl: Reporting of Direct Channel Parameters" and "G.vdsl: Intelligent Design of Estimation Precoding Matrices" or a proposal by Infineon titled "G.vdsl Method of Downstream FEXT cancellation". These proposals are based on the addition of new parameters (besides Signal to Noise ratio (SNR), bit loading, QLN, ...) to the standard specification which can then be provided to for instance the Central Office.

It is an objective of the present invention to improve the accuracy of the estimated crosstalk between multiple communication lines.

## Summary of the Invention

The objectives of the present invention are realized and the shortcomings of the prior art are overcome by a crosstalk estimation device for estimating crosstalk between a plurality of communication lines, this plurality comprising one or more disturber communication lines and one or more victim communication lines and the crosstalk estimation device comprising means for receiving measured changes in operational parameters on the victim communication lines and means for changing the transmit power and/or power spectral density PSD on one or more of the victim communication lines and/or one or more of the disturber communication lines prior to measurement of the changes in operational parameters.

Although other operational parameters can be used as well, including those under discussion in standards such as the slicer error, error(f), the remainder of this section is focused on one particular operational parameter, namely the Signal to Noise Ratio SNR.

Indeed, by changing the transmit power and/or the Power Spectral Density PSD on one or more of the communication lines, the SNR will change on other communication lines. If the transmit power and/or PSD changes on a single disturber line, all the lines which are disturbed by that line will notice a change in SNR. These changes can be measured and be reported back to the crosstalk estimation device according to the present invention, residing for Instance in the access multiplexer. If a change is made to the transmit power or PSD on multiple disturber lines, the victim lines will notice a change in SNR that represents the combine effect of the changed transmit power or PSD on the disturber lines. Thus, by changing the transmit powers of the disturber lines a number of times, the crosstalk information related to multiple disturber lines can be estimated jointly thanks to the crosstalk estimation according to the present invention. Note that a line can be a victim and a disturber at the same time. Indeed, a victim line can be a disturber for another line, and a disturber line can be a victim of another line.

Lowering the transmit power or PSD of a communication line reduces the influence of that communication line on other communication lines. According to the present invention and in the case of the specific operation parameter being the SNR, these changes are measured in a standard compliant and backwards compatible fashion through SNR measurements and the measured SNR changes can be related to the amplitude and phase of the crosstalk between various communication channels. In addition, by lowering the transmit power or PSD there is at least temporarily a reduced influence from that line on the other communication lines. Thus, the estimation of the amplitude and phase of the crosstalk itself has hardly any or no negative impact on the operation of the other communication lines. The lowering of the transmit power of strong crosstalkers has the advantage that the crosstalk from weak crosstalkers can be observed with a lager accuracy Alternatively, raising the transmit power or PSD also enables determining the amplitude and phase of crosstalk between various communication lines but may have a negative impact on the other communication lines, for instance due to a stronger crosstalk Influence. It is of course also possible to perform a first SNR measurement after decreasing and a second SNR measurement after increasing the transmit power, or changing the transmit power or PSD can be performed after other changes to the condition of one or more communication lines have been executed in order to avoid significant influences on the communication lines during the measurement.

The measured changes in SNR can be received from either a device at the same side of the communication line as the crosstalk estimation device of the present invention or from a device at the other end of the communication line. For instance, if the DSLAM is adapted to incorporate an embodiment of the crosstalk estimation device according to the present invention, it can change the transmit power and/or PSD on each communication line terminated at the DSLAM. These changes can then be measured at the CPE side, by an SNR measuring function forming part of the CPE or coupled to the CPE. The measured SNR changes are then delivered to the crosstalk estimation device of the present invention. This delivery can occur over a direct coupling between the crosstalk estimation device and the SNR measuring device or may involve communication between various devices over one or more communication lines or electric couplings. Furthermore, receiving the changes in SNR can be done automatically, or may be the result of a request Issued by the device.

Optionally, the means for changing the transmit power and/or power spectral density PSD in the crosstalk estimation device according to the present invention may be adapted to change the transmit power and/or power spectral density PSD based on one or more Transmit Spectrum Shaping (TSSi) Coefficients.

The TSSi coefficients as defined in ITU-T G. 992.3, G.992.5, G.993.2) are configured during the initialization of a communication line. These coefficients are used in the shaping of the transmit PSD and as such should be known by both transmitter and receiver. For instance, the receiver needs to know the TSSi coefficients used by the transmitter to allow measurement of the direct channel impulse response, for initialization and tracking of the time domain equalization (TEQ). The TSSi coefficients are fixed once a communication line is initialized and current DSL standard specifications do not support a protocol to communicate a reconfiguration of these TSSi coefficients during show-time. In general, a change in TSSi coefficients in the transmitter without a communication to the receiver will disturb the tracking of the TEQ. A first way to change the TSSi values without disturbing the TEQ is by scaling the TSSi values in amplitude with the same amount over all tones per line. This will not change the shape of the impulse response and therefore does not disturb the tracking of the time domain equalization (TEQ) if any TEQ is present. The uniform scaling of the TSSi only results in a constant gain which can be tracked by the frequency domain equalizer, provided the scaling is applied smoothly, using small steps spread over time. A second way to change the TSSi values without disturbing the time domain equalization (TEQ) is by changing the TSSi values by small amounts within limits of acceptable performance degradation.

The means for changing the transmit power and/or PSD in the crosstalk estimation device according to the present invention, may be adapted to change the transmit power and/or power spectral density PSD based on one or more On-Line Reconfiguration OLR commands.

By implementing one or more On-Line Reconfiguration (OLR) commands, changing the transmit power and/or PSD during show-time becomes more flexible. Such OLR commands provide a way to both ends of a communication line to change the current conditions of the communication line, for instance those as agreed during initialization. These OLR commands can for instance be used to change the transmit power, PSD, TSSi coefficients, data rate, etc.

The present invention further relates to a method for estimating crosstalk between a plurality of communication lines, the plurality comprising one or more disturber communication lines and one or more victim communication lines and the method comprising the step of receiving measured changes in operational parameters on the victim communication lines and/or disturber communication lines, and the step of changing the transmit power and/or power spectral density PSD on the victim communication lines and/or the disturber communication lines prior to measurement of the changes in operational parameters.

Optionally, the method for estimating crosstalk according to the present invention may further comprise one or more of the following steps prior to the step of receiving the measured changes in operational parameters:

- adding artificial noise on one or more of the plurality of communication lines;
- adapting the data rate on the communication lines; and
- removing the artificial noise from the communication lines.

The addition of artificial noise on one or more tones of one or more communication lines decreases the noise margin on these communication lines. As a consequence of the change in noise margin, the data rate on the communication lines may be decreased by autonomous action of the receiver (e.g. based on Seamless Rate Adaptation (SRA) as defined in ITU-T G.992.3, G.992.5, G.993.2). By reducing the artificial noise after the data rate is lowered, an additional noise margin is created, which can be used for coping with the extra crosstalk, generated in the case of the method using an increase of the PSD on the disturber lines, to allow the measurement of operational parameters and the reporting thereof. After the measurement, the increased PSD is removed, and the data rate is allowed to increase back to its original value, for instance by autonomous action of the receiver. However, it may increase to a data rate higher than the original data rate or remain below the original data rate.

This type of behaviour related to changes in noise margin is normal behaviour under xDSL standard specifications. This means that the method as described above is compliant with existing standard specifications and as such does not require additional changes to the standard specifications.

Further optionally, the method for estimating crosstalk according to the present invention may comprise the steps of:

- reducing the data rate on one or more of the plurality of communication lines using an On-Line Reconfiguration OLR command prior to the step of receiving the measured operational parameters; and
- increasing the data rate on the communication lines using an On-Line Reconfiguration OLR command after receiving the measured changes in operational parameters,

the method may further be adapted in that the step of changing the transmit power and/or the Power Spectral Density PSD uses an On-Line Reconfiguration OLR command.

By introducing OLR commands for transmitter controlled changes to the data rate, transmit power and/or PSD, the crosstalk estimation device has direct control on these parameters. The above described scenario, where changes are based on artificial noise, and data rate changes by autonomous action of the receiver may remain stuck at a lower data rate after the SNR measurement. By using an OLR, the DSLAM and CPE can be forced to return to a particular data rate, transmit power and/or PSD.

**Brief Description of the Drawings**

Fig. 1 illustrates a use of an embodiment of the device according to the present invention in a crosstalk measurement; and
Fig. 2 illustrates an embodiment of the device according to the present invention.

**Detailed Description of Embodiment(s)**

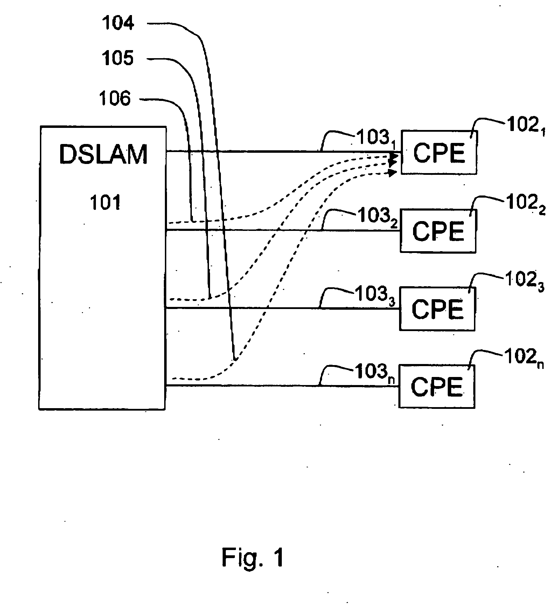

Fig. 1 Illustrates a typical scenario wherein an embodiment of the crosstalk estimation device according to the present invention is used. Fig. 1 shows a number of communication lines, terminated at one side in a Central Office (CO) and at various locations such as houses or office buildings, on the other side. In particular, Fig. 1 shows a Digital Subscriber Line Access Multiplexer (DSLAM) 101 at the CO, a set of Customer Premises Equipment (CPE) $102_1$ to $102_4$ and a number of Digital Subscriber Lines (DSL) $103_1$ to $103_4$ connecting the DSLAM 101 respectively to the CPEs $102_1$ to $102_4$. In this particular example, we will assume that DSL line $103_1$ is the victim line and DSL lines $103_2$ to $103_4$ are the disturber lines.

The DSLAM 101 will configure the transmit power 104, 105 and 106 for transmission on the DSL lines $103_2$ to $103_4$ individually. The CPE $102_1$ is supposed to be able to measure the Signal to Noise Ratio SNR. Once the CPE $102_1$ has information related to the SNR or the changes in SNR due to the changes in transmit power on the disturber lines $103_2$ to $103_4$, it can report such information back to the DSLAM 101. The victim line $103_1$ is influenced by the changes in transmit power on each of the disturber DSL lines $103_2$ to $103_4$. Therefore, changes in SNR on victim line $103_1$ are the result of all these changes rather than one change at a time. As a consequence CPE $102_1$ is able to report back information that is indicative for the total crosstalk induced on victim line $103_1$ rather than the influence of a single disturber DSL line. DSLAM 101 uses the reported information to determine the crosstalk between each pair of lines which in turn may be used to configure crosstalk compensation mechanisms at the CO side.

In the case illustrated in Fig. 1, there are three crosstalkers, the transmitters respectively connected to transmission lines $103_2$ to $103_4$. For an estimation of the amplitude of the crosstalk induced by these crosstalkers in line $103_1$, three different configurations of transmit powers (or PSDs) are used. In other words, the number of transmit power or PSD configurations and the number of corresponding SNR measurements has to be chosen in such a way that the resulting estimation problem is mathematically solvable. Thus, the linear set of equations enabling to estimate the crosstalk amplitudes needs to have at least as many equations as variables.

It should be noted that although four DSL lines are shown in Fig. 1, a typical DSLAM is connected to more than 4 DSL lines. Thus, the crosstalk estimation according to the present invention can operate on more than 4 DSL lines. For instance, crosstalk precompensation may run on a line termination card which typically supports many more lines. Furthermore, in an alternative embodiment, the DSLAM may perform the measurement of SNR changes, which does not require additional communication over the DSL lines to report the results.

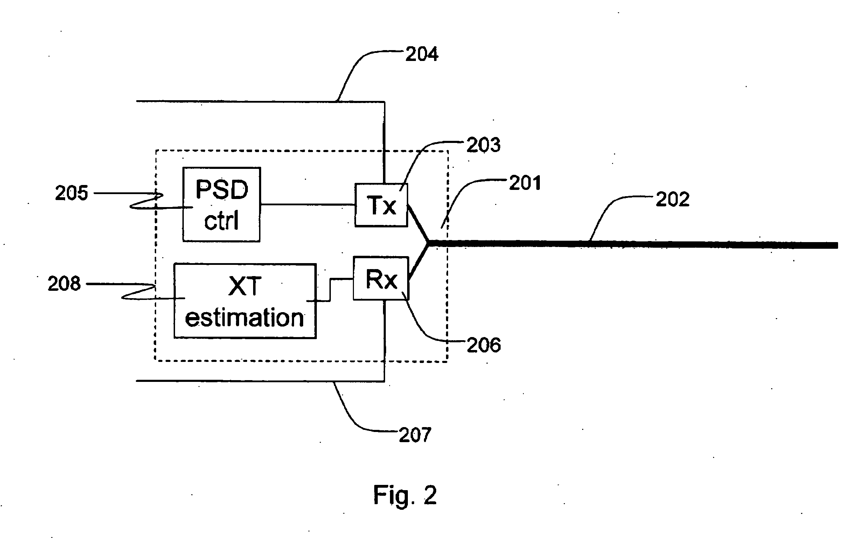

Fig. 2 illustrates one embodiment of the crosstalk estimation device according to the present invention. In this particular embodiment a module 201 is shown, connected to a Digital Subscriber Line (DSL) 202. The DSL line 202 corresponds for instance to one of the DSL lines $103_1$ to $103_4$ in Fig. 1. The crosstalk estimation module 201 contains a transmitter (Tx) 203 which is designed to transmit data over DSL line 202. The transmitter 203 may be responsible for encoding the data in the correct format, add information related to one or more layers such as the physical layer and/or the transport layer, etc. The transmitter 203 has an interface 204 which enables the reception of data for transmission. In an alternative embodiment, transmitter 203 is only a line driver which places the data on the medium and does not add any information or does not perform any encoding of data. The transmitter 203 is further connected to a PSD controller 205. The PSD controller 205 is able to change the Power Spectral Density (PSD) from the transmitter 203. This way, the PSD on line 202 can be changed. In an alternative embodiment, the PSD controller 205 can be adapted with an interface to receive instructions. For instance, the interface can be connected to the receiver (Rx) 206 to receive instructions from remote sources such as a network management platform or notifications from remote sources indicating that a change In PSD was successful. This may be the case where the PSD of a CPE is changed with OLR commands sent by a DSLAM to the CPE. The PSD controller 205 may also be connected to other hardware in a DSLAM which is able to generate instructions. For instance a DSLAM may trigger the PSD controller 205 for each DSL line 202 when a new line is initialized, at regular or random time intervals to update information, upon request by a network manager platform, etc.

The receiver 206 is connected to the DSL line 202 and is able to interpret signals which are transmitted over DSL line 202. The receiver 206 contains an interface 207 to transport received data to other parts of the device wherein module 201 is integrated. The receiver 206 further contains an interface to a crosstalk estimation function 208. In a DSLAM or other central node, the crosstalk estimation function 208 is able to receive reported operational parameter measurements (e.g. SNR measurements) which are received by the receiver 206 over DSL line 202 from a CPE or measurements of operation parameters received from a measurement function in the DSLAM. The crosstalk estimation function may be able to use this information to estimate the crosstalk and eventually configure crosstalk compensation mechanisms in the DSLAM or CPE wherein module 201 is integrated or it may be able to deliver such information to other modules in the DSLAM or CPE.

Of course, the shown embodiment is only one possible implementation of the crosstalk estimation device according to the present invention. For instance, PSD controller 205 may be more centralized in a DSLAM, LT card or a chipset and be adapted to control the PSD and/or transmit power of multiple transmitters in the DSLAM, LT card or chipset. In addition, the crosstalk estimation function 208 may be more centralized in a DSLAM, LT card or a chipset to receive information from multiple receivers in the DSLAM, LT card or chipset. Furthermore, one or more of the shown modules may be integrated into a single module or these modules may even be split into different modules.

The above described examples illustrate that operational parameters and changes thereto can be measured based on changes in the power spectral density on victim and/or disturber communication lines. One particular communication where such measurement can be used is the Digital Subscriber Line (xDSL) technology which in its standard specification already supports the reporting of SNR measurements by the CPE. The example given below is a mathematical view on an algorithm which is able to estimate jointly the amplitude of crosstalk channels by changing the transmit powers of disturber and/or victim communication lines.

In this example which is specifically related to DSL technology, we consider K active subscriber lines which is made up out of $K_a$ subscriber lines which pertain to the' vectoring group to reduce or avoid crosstalk and thereto use the precoding matrix F and $K_n$ subscriber lines which are joining. In total there are $K = K_a + K_n$ subscriber lines. For instance, in relation to Fig. 1K is equal to 4. For these communication lines, the received downstream signal at a given tone can be written as $y = H \cdot F \cdot A \cdot x + w$. In this equation the parameter F relates to the above mentioned precoding matrix, parameter H is a K K channel matrix, parameter A is a K * K diagonal matrix which is representative for the square root of the transmit powers of the different lines and the parameter x is a vector of size K and consists of the M-QAM data symbols with unitary variance and the parameter w is the additive noise on the communication lines.

The values in the precoding matrix F can be determined as follows, for the ranges of $i = 0,..., K$ -1 and $j = K_a,..., K$ -1 the value of $F_{i,j} = F_{j,i} = 0$ where $i \neq j$. For the range of $i = K_a,...,K$ -1 the value of $F_{i,j}$ =1. Thus, the precoded matrix F is an identity matrix for the $K_n$ lines which are not active yet and thus are not yet precoded. In case there is no precoding, the matrix F will be a complete identity matrix. In this particular example we will consider the victim line, for which a crosstalk estimation is performed is the line with index 0. Because the crosstalk from the first $K_a$ lines on the considered victim line is already precompensated, we will look for the crosstalk channels for the $K_n$ joining lines. When $K_a$ = 1, the example below also represents the case where crosstalk channels are estimated When precoding is not or not yet active.

The crosstalk channels are denoted as $H_{i,j}$ with two indices, the first indicating one of the victim lines and the second indicating the disturbed line. Thus, $H_{0,1}$ with $i=1,...,K_n$ indicates the respective crosstalk channels for each of the $K_n$ non-precompenstated disturber lines. The goal of the present invention is to estimate the amplitudes of the crosstalk channels $|H_{0,1}|$ or the normalized ones $|H_{0,1}/H_{0,0}|$ for $i=1,...,K_n$. Whether the crosstalk channels or the normalized ones are estimated depends on the availability of the direct crosstalk channel amplitude $|H_{0,0}|$. A few assumptions are made for this particular example, the first one being realized by the present invention. The first assumption is that the transmit power or PSD for each of the communication lines can be changed during the initialization of the communication line or during active operation of the communication line. The transmit power of a specific communication line $k$ is indicated by $A_k^2$ with $k$ ranging from 0 to $K_n$. A second assumption is that a CPE is able to measure the Signal to Noise Ratio (SNR) and is able to report the measurement back to the Central Office (CO). In a typical xDSL system, this assumption is always true because this behaviour is part of the standard specification. Considering the above given formula for the received signal at a given tone for the victim communication line and the above described notations of matrices, the formula can be rewritten as

$$y_0 = H_{0,0} \cdot A_0 \cdot x_0 + \sum_{i=1}^{K_s} H_{0,i} \cdot A_i \cdot x_i + w_0 .$$  Thus, the received signal is made up out of the signal transmitted on the line itself with $i = 0$, the sum of the signals induced by the other communication lines, $i$ ranging from 1 to $K_n$ and the additive noise present on the victim line.

The SNR measured by the CPE can be defined as 
$$SNR_p = \frac{|H_{0,0}|^2 \cdot A_0^2}{\underbrace{\sum_{i=1}^{K_s} |H_{0,i}|^2 A_i^2 + \sigma_w^2}_{\sigma^2(p,H)}}$$

wherein $p = \left[A_1^2,...,A_{K_s}^2\right]^T$. Thus, if the reported SN-$R_p$, the amplitude of the channel transfer function $H_{0,0}$, the transmit power $A_0^2$ and the additive variance $\sigma_w^2$ are known, it is possible to calculate the crosstalk noise variation $\sigma^2(p,H)$ using the formula of $SNR_p$. Note that $\sigma_w^2/|H_{0,0}|^2$ can be obtained by using one extra SNR measurement corresponding to one extra transmit power configuration p.

Based on this information and the transmit powers, it is possible to estimate the amplitude of the crosstalk channels. To achieve this, a matrix P is defined which is of size $K_n * K_n$ and where its $k^{th}$ row is composed of a given set of transmit powers $p = (P_{k,l:k_n})^T$. Thus, each row of the matrix P requires a set of transmit powers of the $K_n$ crosstalkers. In order to build a matrix which is invertible, the selected transmit powers of the different crosstalkers have to be selected without significant changes to the powers from one row of P to another. Furthermore, a $K_n$-vector column θ is defined as θ= $[|H_{0,1}|^2,...,|H_{0,1}|^2,...,|H_{0,K_n}|^2]^T$ and a $K_n$-column vector $\sigma^2$ which consists of the crosstalk noise variance measurements and which corresponds to the different Kn power configuration in the matrix P. This leads to the compact matrix representation $\sigma^2 = P \cdot θ$, which in turn can be re-

worked to $\theta = P^{-1} \cdot \sigma^2$, This means that $K_n$ sets of transmit powers are needed, where one set is made up out of one row of the matrix P.

In the reduced system model above the derivations were restricted to one victim line ($K_a$=1) in the presence of $K_n$ joining lines. In practice we have more than one victim line pertaining to the vectoring group ($K_a$>1) that can simultaneously measure the crosstalk from the joining lines using the same P matrix. Note that in this example, it is assumed that the transmit powers of the new lines can change. It is also possible to combine the change of the transmit powers of both victim and disturber lines for the purpose of the crosstalk estimation.

For crosstalk precompensation, both the amplitude and the phase of the crosstalk channel must be known. In the example of estimating the channel by SNR measurements, the phase measurement can be done similarly to the example given above, i.e. by constructing a (possibly different) invertible $K_n x K_n$ P matrix. In the example of phase measurement, the precoding matrix F may need to be altered as described in USPTO case 'Determining Channel Matrices By Correlated Transmissions To Different Channels' filed by Alcatel-Lucent on August 31 2007.

The example above describes the event where unprecoded lines join a (possibly precoded) group of lines. In another example, the crosstalk channel measurements are updated regularly to track time variations of the channels. In this case, per updating step a $K_d x K_d$ P matrix similar to the one described above is constructed, where $K_d$ is the number of disturber lines from which the crosstalk channels need to be estimated.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second" and the like, when used in the description or in the claims are introduced to distinguish between similar elements or steps and are not necessarily describing a sequential or chronological order. It is to be understood that the terms so used are interchangeable under appropriate circumstances and embodiments of the invention are capable of operating according to the present invention in other sequences, or in orientations different from the one (s) described or illustrated above.

## Claims

1. A crosstalk estimation device for estimating crosstalk between a plurality of communication lines, said plurality comprising one or more disturber communication lines and one or more victim communication lines and said crosstalk estimation device comprising means for receiving measured changes in operational parameters on said victim communication lines and/or disturber communication lines, **characterized in that** said crosstalk estimation device further comprises means for changing the power spectral density PSD on one or more of said victim communication lines and/or one or more of said disturber communication lines prior to measurement of said changes in operational parameters.

2. The device for measuring crosstalk according to claim 1, **characterized in that** said operational parameters include the Signal to Noise Ratio SNR.

3. The device for measuring crosstalk according to claim 1, **characterized in that** said operational parameters include the slicer error, error(f).

4. The crosstalk estimation device according to claim 1, **characterized in that** said means for changing the transmit power and/or power spectral density PSD are adapted to change said power spectral density PSD based on one or more Transmit Spectrum Shaping TSSi Coefficients.

5. The crosstalk estimation device according to claim 1, **characterized in that** said means for changing the transmit power and/or power spectral density PSD are adapted to change said power spectral PSD density based on one or more On-Line Reconfiguration OLR commands.

6. A method for estimating crosstalk between a plurality of communication lines, said plurality comprising one or more disturber communication lines and one or more victim communication lines and said method comprising the step of receiving measured changes in operational parameters on said victim communication lines and/or said disturber communication lines,

**characterized in that** said method further comprises the step of changing the power spectral density PSD on said victim communication lines and/or said disturber communication lines prior to measurement of said changes in operational parameters.

7. A method for estimating crosstalk according to claim 6, **characterized in that** said method further comprises one or more of the following steps prior to said step of receiving said measured changes in operational parameters:

    - adding artificial noise on one or more of said plurality of communication lines;
    - adapting the data rate on said communication lines; and
    - removing said artificial noise from said communication lines.

8. A method for estimating crosstalk according to claim 6, **characterized in that** said method further comprises the steps of:

    - reducing the data rate on one or more of said plurality of communication lines using an On-Line Reconfiguration OLR command prior to said step of receiving said measured changes in operational parameters; and
    - increasing said data rate on said communication lines using an On-Line Reconfiguration OLR command after receiving said measured changes in operational parameters.

9. A method for estimating crosstalk according to claim 8, **characterized in that** said step of changing said Power Spectral Density PSD uses an On-Line Reconfiguration OLR command.

Fig. 1

EP 2 034 622 A1

Fig. 2

**European Patent Office**

**EUROPEAN SEARCH REPORT**

Application Number

EP 07 29 1084

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/129145 A (ADAPTIVE SPECTRUM AND SIGNAL A [US]; CIOFFI JOHN M [US]; RHEE WONJONG) 7 December 2006 (2006-12-07) | 1,2,4-9 | INV. H04B3/32 H04B3/46 |
| Y | * page 9, line 16 - line 22 * <br> * page 13, line 7 - page 14, line 12 * <br> * page 15, line 22 - page 16, line 1 * <br> * page 24, line 9 - line 26 * <br> * page 28, line 8 - page 29, line 20 * <br> ----- | 3 | H04M11/06 H04L27/26 |
| Y | LOUVEAUX ET AL: "Downstream VDSL Channel Tracking Using Limited Feedback For Crosstalk Precompensated Schemes" ACOUSTICS, SPEECH, AND SIGNAL PROCESSING, 2005. PROCEEDINGS. (ICASSP '05). IEEE INTERNATIONAL CONFERENCE ON PHILADELPHIA, PENNSYLVANIA, USA MARCH 18-23, 2005, PISCATAWAY, NJ, USA,IEEE, 18 March 2005 (2005-03-18), pages 337-340, XP002414958 ISBN: 0-7803-8874-7 * paragraph [0004] * ----- | 3 | |
| A | WO 2007/029241 A (ACTELIS NETWORKS LTD [IL]; ILANI ISHAI [IL]) 15 March 2007 (2007-03-15) * paragraph [0051] - paragraph [0056] * ----- | 1-9 | TECHNICAL FIELDS SEARCHED (IPC) <br><br> H04L H04B H04M |

The present search report has been drawn up for all claims

| Place of search | Date of completion of the search | Examiner |
|---|---|---|
| Munich | 19 February 2008 | Giglietto, Massimo |

EPO FORM 1503 03.82 (P04C01)

**ANNEX TO THE EUROPEAN SEARCH REPORT
ON EUROPEAN PATENT APPLICATION NO.**

EP 07 29 1084

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2008

| Patent document cited in search report | Publication date | Patent family member(s) | Publication date |
|---|---|---|---|
| WO 2006129145 A | 07-12-2006 | US 2007036339 A1 | 15-02-2007 |
| WO 2007029241 A | 15-03-2007 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 04292070 A

**Non-patent literature cited in the description**

- *Determining Channel Matrices By Correlated Transmissions To Different Channels,* 31 August 2007